# EUROPÄISCHE PATENTSCHRIFT

(11) **EP 2 189 703 B1**
(45) Veröffentlichungstag und Bekanntmachung des Hinweises auf die Patenterteilung: **02.05.2012**
(21) Anmeldenummer: 09174403.7
(22) Anmeldetag: 29.10.2009
(51) Int. Cl.: F16L 35/00

(54) **Sicherheitseinrichtung an einem Hochdruckanschluss für ein Hydraulikgerät**
Safety device for a high-pressure connector of a hydraulic device
Dispositif et procédé de manipulation des extrémités de câbles

(30) Priorität: 25.11.2008 DE 102008058923
(43) Veröffentlichungstag der Anmeldung: 26.05.2010
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner

(56) Entgegenhaltungen:
- EP-A1- 0 230 184
- EP-A1- 0 805 299
- EP-A1- 1 600 683
- US-A- 3 784 236
- US-A- 4 314 671
- US-A- 6 052 972
- US-A1- 2006 065 312

## Beschreibung

Die Erfindung betrifft eine hydraulische Schraubenspannvorrichtung mit einem Hochdruckanschluss, einer Sicherheitseinrichtung an dem Hochdruckanschluss und einer den Hochdruckanschluss umgebenden, unter hohem Druck austretende Hydraulikflüssigkeit abfangenden Abschirmung.

Eine aus der DE 10 2004 043 145 B3 derselben Anmelder bekannte Schraubenspannvorrichtung besteht aus einem sich auf einem mittels eines Gewindebolzens und einer Mutter zu verspannenden Maschinenteil abstützenden hydraulischen Zylinder. Darin ist abgedichtet geführt und mit dem Zylinder einen Ringraum bildend ein Kolben angeordnet, der sich an einer Verlängerung einer auf ein Gewinde des Gewindebolzens aufgeschraubten Wechselbuchse abstützt. Weiterer Bestandteil der Vorrichtung ist eine gesteuerte Druckmittelzufuhr zum Ringraum.

Mit derartigen Schraubenspannvorrichtungen lässt sich eine genau vorgegebene, rein axiale Vorspannkraft auf eine Schraube aufbringen, um die auf die Schraube aufgeschraubte Mutter anziehen oder lösen zu können. Hierzu wird eine Wechselbuchse der Schraubenspannvorrichtung auf das oberhalb der Mutter überstehende Gewinde aufgeschraubt, und danach die Schraubenspannvorrichtung unter hydraulischen Druck gesetzt. Das hat zur Folge, dass die Schraube durch ein rein axiales Längen gespannt wird. Die dabei auf die Schraube aufgebrachten Zugkräfte sind außerordentlich hoch, wodurch die Schraubenspannvorrichtung und deren Einzelteile sehr stark beansprucht werden, da die hydraulischen Drücke bis zu 4.000 bar betragen können.

In der DE 100 35 691 A1 ist eine Hochdruckschlauchleitung zur Verbindung einer Hochdruckpumpe mit einer hydraulischen Schraubenspannvorrichtung beschrieben, die gegen das Wegschleudern von Teilen der Hochdruckschlauchleitung bei Bruch dieser Teile gesichert ist. Zu diesem Zweck ist die Hochdruckschlauchleitung versehen mit einem darin eingepressten Einpressnippel mit einem zylindrischen Bereich und einem sich zu einem aus dem Hochdruckschlauch herausragenden Bereich des Einpressnippels hin erweiterten konischen Bereich, ferner Nuten auf der Außenfläche der Bereiche, ferner einer die druckfeste Verbindung zwischen dem Hochdruckschlauch und dem Einpressnippel bewirkenden, beide übergreifenden, sich über die Länge der Bereiche erstreckenden, aber mit dem Hochdruckschlauch nur im konischen Bereich verpressten Einpresshülse und einer an dem aus dem Hochdruckschlauch und der Einpresshülse herausragenden Bereich des Einpressnippels und an der Außenseite der Einpresshülse wenigstens mit Reibschluss befestigten, länglichen Sicherheitshülle. Diese Schraubenspannvorrichtung und die daran verwendete Hochdruckschlauchleitung haben sich bewährt, jedoch hat sich herausgestellt, dass in Einzelfällen im Bereich des Hochdruckanschlusses am Hydraulikgerät Undichtigkeiten auftreten können. Das hierbei unter hohem Druck austretende Hydraulikfluid kann eine Verletzungsgefahr für eine sich in der Nähe aufhaltende Bedienperson bedeuten.

In der EP 0 805 299 A1 ist eine Einrichtung zur Verbindung einer flexiblen Kunststoff-Doppel-Rohrleitung mit einem Gebrauchswasser-Verbraucher beschrieben. Die Einrichtung für interne Hauswasser-Versorgungsnetze dient zur Verbindung von flexiblen Kunststoff-Doppel-Rohrleitungen mit Verbrauchern, wobei das wasserführende Innenrohr mittels einer Schraubverbindung an das im an sich bekannten Dosen-Grundkörper sitzende Anschlussstück montiert ist. Bestandteil der Einrichtung ist ein an den Dosen-Grundkörper ankuppelbarer Dosenfuß, der aus einem im Zweikomponenten-Spritzverfahren hergestellten, skelettartigen Primärteil aus formstabilem Material und einem segmentförmig angespritzten Sekundärteil mit einer Zwischendichtung und einer Abschlussdichtung aus gummiartigem Material besteht. Der Dosenfuß ist flexibel, erleichtert somit die Montage, ermöglicht eine solide Abdichtung gegenüber dem Dosen-Grundkörper sowie dem eingeführten Leerrohr und lässt sich als Massenartikel als Kunststoffspritzgussteil kostengünstig herstellen.

Diese Einrichtung ist geeignet, dem Druck in Hauswasser-Versorgungsnetzen zu widerstehen, der 10 bar nicht übersteigt. Konstruktions- und materialbedingt ist diese Einrichtung für Hydraulikgeräte, die unter einem hydraulischen Druck von bis zu 4000 bar stehen können, nicht geeignet.

Dementsprechend liegt der Erfindung die **Aufgabe** zugrunde, das Verspritzen von unter hohem Druck stehender Hydraulikflüssigkeit bei auftretenden Undichtigkeiten an einem Hochdruckanschluss für Hydraulikgeräte und insbesondere für einen hydraulischen Schraubenspannzylinder zu verhindern.

Zur **Lösung** dieser Aufgabenstellung wird eine hydraulisch betätigte Schraubenspannvorrichtung mit den Merkmalen des Patentanspruchs 1 vorgeschlagen.

Im Bereich der Befestigung des Hochdruckanschlusses am Hydraulikgerät sowie des Anschlusses einer Hochdruckschlauchleitung am Hochdruckanschluss ist eine Abschirmung angeordnet und zwar in der Weise, dass im Falle von unter hohem Druck austretender Hydraulikflüssigkeit diese durch die Abschirmung abgefangen wird, d.h. aus dieser Abschirmung nur drucklos oder stark druckvermindert heraustreten kann, so dass keine Gefährdung für sich in der Nähe befindende Bedienpersonen mehr besteht.

Die Abschirmung besteht aus einem einen Druckmittelverteiler abgedichtet umgebenden Gehäuse und einem einen Anschlussnippel für eine mittels einer Schlauchkupplung mit dem Anschlussnippel kuppelbaren Hochdruckschlauchleitung umgebenden Schutzrohr.

Da Bestandteil der Abschirmung das Schutzrohr ist, und dieses die mit dem Hochdruckanschluss kuppelbare Schlauchkupplung der Hochdruckschlauchleitung umgibt, wird der Gefahr eines ungewollten Lösens der Schlauchkupplung von dem Hochdruckanschluss durch mindestens ein Riegelelement vorgebeugt, welches die Schlauchkupplung in Längsrichtung gegenüber dem Schutzrohr sichert.

Das Riegelelement ist querbeweglich in dem Schutzrohr angeordnet, und greift mit mindestens einem Verriegelungsabschnitt formschlüssig in eine Ausnehmung oder Hinterschneidung der Schlauchkupplung ein. Insbesondere kann das Riegelelement so gestaltet sein, dass es formschlüssig in eine Umfangsnut außen an der Schlauchkupplung eingreift.

Das Schutzrohr lässt sich vorzugsweise auf einen den Anschlussnippel umgebenden Gewindestutzen am Gehäuse aufschrauben und umgibt nicht nur den Anschlussnippel sondern auch noch schützend einen Teil der Hochdruckschlauchleitungslänge, wodurch dieser Bereich der Hochdruckschlauchleitung gegen Abknicken geschützt ist und die unter hohem Druck stehende Hydraulikflüssigkeit bei einem Bersten der Hochdruckschlauchleitung oder einem Abbrechen des Anschlussnippels durch das Schutzrohr abgefangen wird.

Das Schutzrohr lässt sich zugleich als Halte- und Traggriff für die Schraubenspannvorrichtung ausbilden, und zusätzlich auf seinem Außenumfang mit ergonomisch gestalteten Griffrillen versehen, wodurch die Handhabung der Schraubspannvorrichtung erleichtert wird.

Gemäß einer vorteilhaften Ausgestaltung ist das Riegelelement als eine durch Queröffnungen des Schutzrohrs hindurchsteckbare Gabel ausgebildet, zwischen deren beiden Zinken die Schlauchkupplung hindurchführt, um sie so in Längsrichtung zu verriegeln.

Die Erfindung wird nachstehend anhand eines in der Zeichnung dargestellten Ausführungsbeispiels erläutert. In der Zeichnung zeigen:
- Fig. 1: eine perspektivische Ansicht einer Sicherheitseinrichtung an einer hydraulischen Schraubenspannvorrichtung;
- Fig.2: einen horizontalen Schnitt durch die Sicherheitseinrichtung und die Schraubenspannvorrichtung nach Fig. 1 in Höhe der Sicherheitseinrichtung:

Eine Schraubenspannvorrichtung, an der die erfindungsgemäße Sicherheitseinrichtung angeordnet sein kann, ist zum Beispiel in der DE 10 2004 043 145 B3 (entspricht US 2008/0034925 A1) im Einzelnen beschrieben. Auf die Offenbarung dieser Druckschrift wird daher ausdrücklich Bezug genommen. Gleiche Teile in der vorliegenden Anmeldung und in der DE 10 2004 043 145 B3 (entspricht US 2008/0034925 A1) sind mit denselben Bezugsziffern bezeichnet.

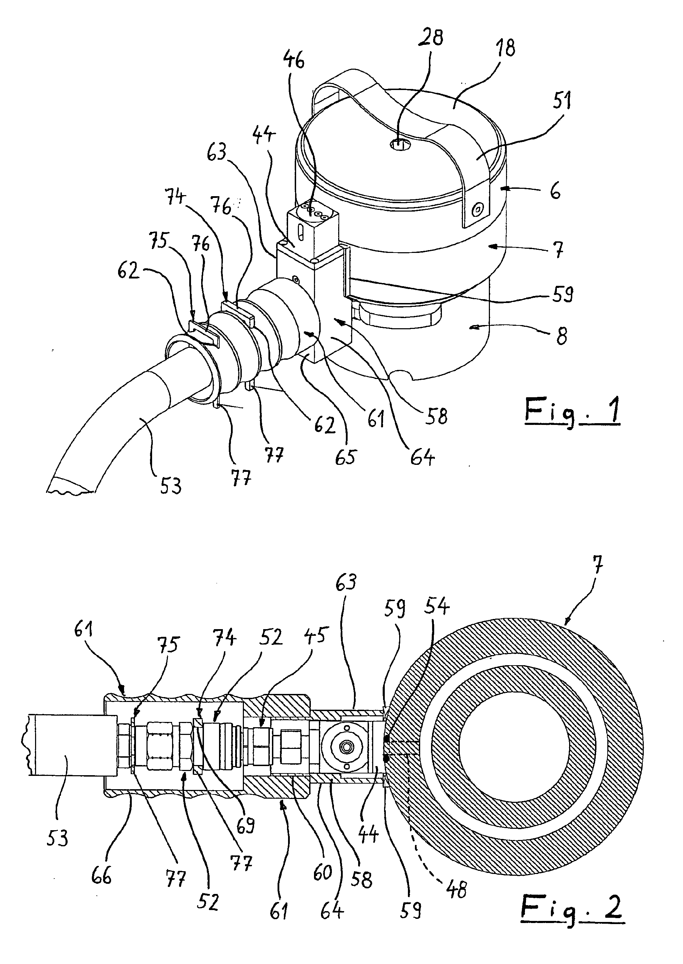

Von der Schraubenspannvorrichtung sind in Fig. 1 äußere Zylinderelemente 6, 7 und ein sich auf einem Maschinenteil abstützender Bereich 8 am Zylinderelement 7 sichtbar. Das Zylinderelement 6 ist durch eine Kappe 18 abgeschlossen, in deren zentral angeordneter Öffnung sich ein Innensechskant 28 befindet, der zum Aufsetzen eines Werkzeugs zum Drehen einer Wechselbuchse dient. Mittels eines Griffbandes 51 lässt sich die Schraubenspannvorrichtung handhaben.

Seitlich an den äußeren Zylinderelementen 6, 7 ist ein Druckmittelverteiler 44 angeschraubt. Dieser kann auch zur Aufnahme eines Lastwechselzählers 46, dessen Funktion in der DE 43 24 888 A1 (entspricht PCT WO 95/03592 A) beschrieben ist, dienen.

Aus Fig. 2 ist ersichtlich, dass in den Druckmittelverteiler 44 ein Anschlussnippel 45 eingeschraubt ist, mit dem sich die Schlauchkupplung 52 einer Hochdruckschlauchleitung 53 hydraulisch dicht kuppeln lässt. Druckmittelverteilerbohrungen innerhalb des Druckmittelverteilers 44 stehen mit Bohrungen 48 in Verbindung, die in die hydraulischen Arbeitsräume innerhalb der Zylinderelemente 6, 7 führen. Die Abdichtung zwischen dem Druckmittelverteiler 44 und dem jeweiligen Zylinderelement 6, 7 ist durch O-Ringdichtungen 54 gewährleistet. Über die Druckmittelverteilerbohrungen gelangt die über die Hochdruckschlauchleitung 53 zugeführte Hydraulikflüssigkeit in den Druckraum mit Arbeitskolben im Inneren der Zylinderelemente 6, 7.

Die im Falle eines Austritts der unter hohem Druck stehenden Hydraulikflüssigkeit gefährdeten Bereiche befinden sich im Bereich der O-Ringdichtungen 54, im Bereich von Dichtflächen des Anschlussnippels 45, und im Bereich der Dichtfläche zwischen dem Anschlussnippel 45 und der Schlauchkupplung 52. Daher ist eine Abschirmung 58 in Form eines den Druckmittelverteiler 44 eng umgebenden Gehäuses vorgesehen. Die Abschirmung 58 ist in geeigneter Weise gegenüber der Schraubenspannvorrichtung verankert, etwa durch Befestigung an dem die Gestalt eines Quaders aufweisenden Druckmittelverteiler 44.

Auch das Gehäuse bzw. die Abschirmung 58 ist in etwa quaderförmig, es ist zum Hydraulikgerät 6, 7, 8 hin offen gestaltet und an zwei Seiten 63, 64 geschlossen. Auch an der dem Hydraulikgerät abgewandten Seite 65 ist das Gehäuse 58 geschlossen, bis auf die erforderliche Öffnung für den Hydraulikanschluss. Das Gehäuse 58 ist an seiner offenen Seite mittels Dichtungen 59 zu den Zylinderelementen 6, 7 hin abgedichtet. Vorzugsweise stützt sich das Gehäuse 58 unter Zwischenlage der Dichtungen 59 gegen die Wandung, d.h. die Außenseite der Zylinderelemente 6, 7 ab.

Auf der Außenseite 65 der Abschirmung 58 ist ein den Anschlussnippel 45 mit Abstand umgebender Gewindestutzen 60 vorgesehen, der einstückiger Bestandteil des Gehäuses 58 ist. Auf diesen Gewindestutzen 60 ist ein Schutzrohr 61 aufschraubbar. Dieses Schutzrohr 61 ist starr und so lang, dass es die Schlauchkupplung 52 und noch eine Teillänge der Hochdruckschlauchleitung 53 aufnimmt, d.h. umgibt.

Das nach außen hin offene Schutzrohr 61 dient zusätzlich als Griff für die Handhabung der Schraubenspannvorrichtung und ist zu diesem Zweck mit ergonomisch gestalteten Griffrillen 66 auf seiner Außenfläche versehen.

Falls im Bereich der O-Ringdichtung 54 unter hohem Druck stehende Hydraulikflüssigkeit austreten sollte, wird sie durch die Abschirmung 58 und die Dichtungen 59 daran gehindert, mit scharfem, ungebremstem Strahl in die Umgebung zu gelangen. Vielmehr wird diese Hydraulikflüssigkeit im Gehäuse 58 abgefangen und kann dann im Wesentlichen drucklos durch das Schutzrohr 61 oder aus anderen, weniger dichten Bereichen der Abschirmung 58 abfließen. Das gleiche gilt für die aus weiteren Dichtflächen austretende Hydraulikflüssigkeit, die im Schutzrohr 61 abprallen kann, und so gebremst wird.

Ferner sind Maßnahmen getroffen, um ein unbeabsichtigtes Lösen der Schlauchkupplung 52 der Hochdruckschlauchleitung 53 von dem Anschlussnippel 45 zu verhindern.

Zu diesem Zweck ist das Schutzrohr 61 mit Queröffnungen 62 versehen, durch welche gabelförmig gestaltete Riegelelemente 74, 75 hindurchsteckbar sind. Die Riegelelemente 74, 75 erstrecken sich daher quer zur Schlauchlängsrichtung und auch quer zu der Längsachse des Schutzrohrs 61. Jedes Riegelelement 74, 75 verfügt über einen Bügel 76, welcher sich hier noch außerhalb des Schutzrohrs 61 befindet, sowie über zwei Zinken 77, die über den Bügel 76 miteinander verbunden sind. Bei in das Schutzrohr eingesteckten Riegelelementen 74, 75 führen die Zinken 77 formschlüssig durch Strukturen an der Außenseite der Schlauchkupplung 52 hindurch. Diese Strukturen können die in der Praxis ohnehin vorhandenen Umfangsnuten 69 der Schlauchkupplung 52 sein, oder auch entsprechend gestaltete Ausnehmungen oder Hinterschneidungen an der Schlauchkupplung 52.

Erreicht wird auf diese Weise eine Verriegelung der Schlauchkupplung 52 und damit des Hydraulikschlauchs in Bezug auf das umgebende Schutzrohr 61, und zwar in Längsrichtung, wodurch mit einfachen technischen Mitteln einem versehentlichen Lösen des Hochdruckschlauchs von dem Hochdruckanschluss 44, 45 vorgebeugt wird.

Die Erfindung ist nicht auf die dargestellten Ausführungsbeispiele beschränkt, sondern erstreckt sich auf viele Arten von Hydraulikgeräten mit einem Hochdruckanschluss, insbesondere beispielsweise druckmittelbetriebene Kraftschrauber wie sie in der DE 10 2004 019 425 A1 derselben Anmelder beschrieben sind, deren Offenbarung vollinhaltlich in die vorliegende Beschreibung einbezogen ist.

## Patentansprüche

1. Hydraulische Schraubenspannvorrichtung mit einem Hochdruckanschluss (44, 45), einer Sicherheitseinrichtung an dem Hochdruckanschluss (44, 45) und einer den Hochdruckanschluss (44, 45) umgebenden, unter hohem Druck austretende Hydraulikflüssigkeit abfangenden Abschirmung (58, 59, 61), wobei die Abschirmung (58, 59, 61) aus einem einen Druckmittelverteiler (44) am Hydraulikgerät (6, 7, 8) abgedichtet (59) umgebenden Gehäuse (58) und einem einen Anschlussnippel (45) für eine mittels einer Schlauchkupplung (52) kuppelbare Hochdruckschlauchleitung (53) umgebenden Schutzrohr (61) besteht, und wobei mindestens ein die Schlauchkupplung (52) in Längsrichtung gegenüber dem Schutzrohr (61) sicherndes Riegelelement (74, 75) querbeweglich in dem Schutzrohr (61) angeordnet ist und mit mindestens einem Verriegelungsabschnitt formschlüssig in eine Ausnehmung oder Hinterschneidung der Schlauchkupplung (52) eingreift.

2. Schraubenspannvorrichtung nach Anspruch 1, **dadurch gekennzeichnet, dass** das Schutzrohr (61) auf ein den Anschlussnippel (45) umgebendes Gewinde (60) am Gehäuse (58) aufschraubbar ist.

3. Schraubenspannvorrichtungnach Anspruch 1, **dadurch gekennzeichnet, dass** das Riegelelement (74, 75) formschlüssig in eine Umfangsnut (69) der Schlauchkupplung (52) eingreift.

4. Schraubenspannvorrichtung nach Anspruch 1, **dadurch gekennzeichnet, dass** das Riegelelement (74, 75) als durch Queröffnungen (62) des Schutzrohrs (61) hindurchsteckbare Gabel ausgebildet ist, zwischen deren beiden Zinken (67) die Schlauchkupplung (52) hindurchführt.

5. Schraubenspannvorrichtung nach einem der Ansprüche 1 bis 4, **dadurch gekennzeichnet, dass** das Schutzrohr (61) so lang ist, dass es auch einen Teil der Hochdruckschlauchleitungslänge schützend umgibt.

6. Schraubenspannvorrichtung nach einem der Ansprüche 1 - 5 **dadurch gekennzeichnet, dass** das Schutzrohr (61) als Halte- und Traggriff für die Schraubenspannvorrichtung (6, 7, 8) ausgebildet ist.

7. Schraubenspannvorrichtung nach Anspruch 6, **dadurch gekennzeichnet, dass** das Schutzrohr (61) auf seinem Außenumfang mit ergonomisch gestalteten Griffrillen (66) versehen ist.

## Claims

1. An hydraulic bolt tensioning apparatus with a high-pressure connection (44, 45), a safety device on the high-pressure connection (44, 45) and a screen (58, 59, 61) which surrounds the high-pressure connection (44, 45) and collects hydraulic liquid issuing at high pressure, wherein the screen (58, 59, 61) comprises a housing (58) surrounding a pressure medium distributor (44) on the hydraulic appliance (6, 7, 8) in a sealed manner (59) and a protective tube (61) surrounding a connection nipple (45) for a high-pressure hose line (53) capable of being coupled by means of a hose coupling (52), and wherein at least one bar element (74, 75) securing the hose coupling (52) with respect to the protective tube (61) in the longitudinal direction is arranged so as to be movable transversely in the protective tube (61) and engages with at least one portion of the bar in a recess or an undercut in the hose coupling (52) in a positively locking manner.

2. A bolt tensioning apparatus according to Claim 1, **characterized in that** the protective tube (61) is capable of being screwed onto a thread (60) - surrounding the connection nipple (45) - on the housing (58).

3. A bolt tensioning apparatus according to Claim 1, **characterized in that** the bar element (74, 75) engages in a peripheral groove (69) in the hose coupling (52) in a positively locking manner.

4. A bolt tensioning apparatus according to Claim 1, **characterized in that** the bar element (74, 75) is designed in the form of a fork which is capable of being inserted through transverse openings (62) in the protective tube (61) and between the two prongs (67) of which the hose coupling (52) extends.

5. A bolt tensioning apparatus according to any one of Claims 1 to 4, **characterized in that** the protective tube (61) is so long that it also surrounds part of the length of the high-pressure hose line in a protective manner.

6. A bolt tensioning apparatus according to any one of Claims 1 to 5, **characterized in that** the protective tube (61) is designed in the form of a holding and carrying handle for the bolt tensioning apparatus (6, 7, 8).

7. A bolt tensioning apparatus according to Claim 6, **characterized in that** the protective tube (61) is provided on its external periphery with ergonomically designed gripping grooves (66).

## Revendications

1. Dispositif de serrage à vis hydraulique comportant un raccord haute pression (44, 45), un mécanisme de sécurité placé sur le raccord haute pression (44, 45) et un blindage (58, 59, 61) entourant le raccord haute pression (44, 45), recueillant le liquide hydraulique sortant à haute pression, le blindage (58, 59, 61) étant composé d'un boîtier (58) entourant de manière étanche (59) un répartiteur d'agent de pression (44) sur l'appareil hydraulique (6, 7, 8) et un tube de protection (61) entourant un écrou-raccord (45) pour une conduite souple haute pression (53) pouvant être raccordée à l'aide d'un tuyau de raccordement (52) et au moins un élément de verrouillage (74, 75), bloquant le tuyau de raccordement (52) dans le sens longitudinal vis-à-vis du tube de protection (61), étant disposé de manière à pouvoir se déplacer dans le sens transversal à l'intérieur du tube de protection (61) et s'engrenant par coopération de formes, avec au moins une section de verrouillage, dans une cavité ou une contre-dépouille du tuyau de raccordement (52).

2. Dispositif de serrage à vis selon la revendication 1, **caractérisé en ce que** le tube de protection (61) peut être vissé sur un filet (60) entourant l'écrou-raccord (45) sur le boîtier (58).

3. Dispositif de serrage à vis selon la revendication 1, **caractérisé en ce que** l'élément de verrouillage (74, 75) s'engrène par coopération de formes dans une rainure circonférentielle (69) du tuyau de raccordement (52).

4. Dispositif de serrage à vis selon la revendication 1, **caractérisé en ce que** l'élément de verrouillage (74, 75) est réalisé sous la forme d'une fourche enfichable dans les orifices transversaux (62) du tube de protection (61), fourche entre les deux pointes (67) de laquelle est introduit le tuyau de raccordement (52).

5. Dispositif de serrage à vis selon l'une quelconque des revendications 1 à 4, **caractérisé en ce que** le tube de protection (61) est si long qu'il entoure également une partie de la longueur de la conduite souple haute pression de sorte qu'il la protège.

6. Dispositif de serrage à vis selon l'une quelconque des revendications 1 à 5, **caractérisé en ce que** le tube de protection (61) est réalisé sous la forme d'une poignée de maintien et de transport pour le dispositif de serrage à vis (6, 7, 8).

7. Dispositif de serrage à vis selon la revendication 6, **caractérisé en ce que** le tube de protection (61) est pourvu de rainures de préhension (66) ergonomiques sur sa circonférence externe.
